# EUROPEAN PATENT APPLICATION

(11) **EP 4 550 171 A1**
(43) Date of publication of application: **07.05.2025**
(21) Application number: 24208791.4
(22) Date of filing: 24.10.2024
(51) Int. Cl.: G06F 16/44, G06T 19/00, G06T 13/00

(54) **METHOD AND SYSTEM FOR ACCESS TO AND FRUITION OF DIGITAL CONTENTS BASED ON INTEGRATION OF EXTENDED REALITY AND ARTIFICIAL INTELLIGENCE**

(30) Priority: 31.10.2023 IT 202300022941
(71) Applicant: Carraro Lab S.r.l., 25036 Palazzolo sull'Oglio (BS) (IT)
(72) Inventor: CARRARO, Gualtiero, I-25036 Palazzolo sull'Oglio (BRESCIA) (IT); CARRARO, Roberto, I-25036 Palazzolo sull'Oglio (BRESCIA) (IT)
(74) Representative: Brunazzi, Stefano

(57) **Abstract**

There is described a method, carried out by electronic processing, for access to and fruition of digital contents comprising extended reality, XR, contents.

The method firstly involves providing at least one 3D three-dimensional database of three-dimensional digital data representative of the aforesaid extended reality, XR, contents. Such a 3D three-dimensional database comprises 3D database elements associated with the representation of extended reality, XR. Such elements belong to at least one of the following types: "environment", "object", "interactive point", "animation".

The method then comprises the step of providing a user interface, accessible through electronic processing means; such a user interface is adapted to receive user indications from a user regarding extended reality contents that the user wishes to use and/or user indications regarding modes of fruition of extended reality contents.

The method further comprises the step of generating a database of textual documentation based on at least part of the aforesaid user indications.

The method then includes, by means of a trained artificial intelligence, Al, model, identifying the aforesaid 3D database elements and semantically correlating them to information generated by the aforesaid textual documentation database; and carrying out, on the basis of the aforesaid semantic correlation, by the aforesaid artificial intelligence, Al, model, one or more of the following steps:
- activating actions for fruition of extended reality corresponding to the aforesaid user indications regarding extended reality contents, and/or
- providing the user with extended reality contents through modes and/or expressive registers corresponding to the aforesaid user indications regarding modes of fruition.

There is also described a corresponding electronic processing system for access to and fruition of digital contents comprising extended reality, XR, contents.

## Description

### TECHNOLOGICAL BACKGROUND OF THE INVENTION

### Field of application.

The present invention generally relates to the technical field of access to digital contents based on integration of extended reality and artificial intelligence.

In particular, the invention relates to a method and system for access to and fruition of digital contents comprising extended reality, XR, contents, wherein the method is carried out by electronic processing using, *inter alia,* artificial intelligence techniques.

### Description of the prior art.

In the technical field mentioned above, the current prior art offers separate platforms for access to and fruition of augmented reality (AR) and/or virtual reality (VR) functions and for any functions based on artificial intelligence.

The two technological domains are not integrated.

Moreover, the solutions currently proposed are mainly implemented through APPs limited to a single device (for example, a VR visor), which are not accessible in cloud from a web browser, and are not adaptable to different On-site and On-Line fruition modes.

In the aforesaid technical field, there is therefore a strong need to have an integrated XR-AI, cross-device solution, adaptable to different interfaces and modes of fruition, which then at least partly overcomes the aforementioned drawbacks.

A further issue encountered in current solutions is due to the limitations of information provision modality currently used by artificial intelligence, which is substantially textual, therefore aniconic and mono-sensorial.

With respect thereto, the need is thus strongly felt for an integration of virtual contents, capable of obtaining a multimedia and multi-sensorial effect which enables a significant enrichment of the data and teaching experience, and textual contents processed by Artificial Intelligence, capable of offering further textual, in-depth information to extended reality.

The aforesaid needs, particularly felt in the technical field taken into consideration, are not fully met, as far as the Applicant is aware, by the solutions currently known and available in such a field.

### SUMMARY OF THE INVENTION

It is an object of the present invention to provide a method for access to and fruition of digital contents of extended reality, carried out by electronic processing, which allows solving, at least partially, the drawbacks claimed above with reference to the prior art, and responding to the aforementioned needs particularly felt in the technical field considered. Such an object is achieved by a method according to claim 1.

Further embodiments of such a method are defined by claims 2-12.

It is also an object of the present invention to provide a method of training an artificial intelligence model, so as to allow the artificial intelligence model to operate according to the method mentioned above. Such an object is achieved by a method according to claim 13.

It is also an object of the present invention to provide a corresponding electronic processing system for access to and fruition of digital contents comprising extended reality, XR, contents. Such an object is achieved by a system according to claim 14.

Further embodiments of such a system are defined by claim 15.

### BRIEF DESCRIPTION OF THE DRAWINGS

Further features and advantages of the method and system according to the invention will be apparent from the following description of preferred embodiments, given by way of non-limiting indication, with reference to the accompanying drawings, in which:
- Figure 1 shows a schematic depiction of the main components of a platform comprised in an embodiment of the system according to the invention; Figure 1 also schematically shows a corresponding embodiment of the method according to the invention;
- Figure 2 shows examples of 3D database elements and respective examples of actions activated by artificial intelligence, according to an embodiment of the method of the invention;
- Figure 3 shows six fruition modes enabled by the system according to the invention, in accordance with an embodiment of the method of the invention.

### DETAILED DESCRIPTION.

A method for access to and fruition of digital contents, comprising extended reality, XR, contents, is described. The method is carried out by electronic processing.

The method firstly comprises providing at least one 3D three-dimensional database of three-dimensional digital data representative of the aforesaid extended reality, XR, contents. Such a 3D three-dimensional database comprises 3D database elements associated with the representation of extended reality, XR.

Such elements belong to at least one of the following types: "environment", "object", "interactive point", "animation".

The method then comprises the step of providing a user interface, accessible through electronic processing means; such a user interface is adapted to receive user indications from a user regarding extended reality contents that the user wishes to use and/or user indications regarding modes of fruition of extended reality contents.

The method further comprises the step of generating a database of textual documentation based on at least part of the aforesaid user indications.

The method then provides, by means of a trained artificial intelligence, AI, model, the steps of identifying the aforesaid 3D database elements and semantically correlating them to information generated by the aforesaid textual documentation database; and carrying out, on the basis of the aforesaid semantic correlation, by the aforesaid artificial intelligence, AI, model, one or more of the following steps:
- activating actions for fruition of extended reality corresponding to the aforesaid user indications regarding extended reality contents, and/or
- providing the user with extended reality contents through modes and/or expressive registers corresponding to the aforesaid user indications regarding modes of fruition.

In accordance with various possible embodiments of the method, the aforesaid actions for fruition of extended reality are actions governed and activated by the trained artificial intelligence, AI, model, in the three-dimensional database, 3D, and comprise any one or any combination of the following actions:
- action associated with a "3D environment" element, comprising positioning the user within a specific virtual extended reality environment, which, in various implementations, can be a setting drawn in 3D, or a single 360-degree photograph, or a virtual tour or a 360-degree video; and/or
- action associated with a "3D object" or "3D model" element, comprising showing the extended reality object in front of the user; and/or
- action associated with an "interactive point" element, comprising showing a three-dimensional framing of a specific interactive point; and/or
- action associated with an "animation" element, comprising activating an animation to be shown to the user, in the extended reality context.

According to an embodiment of the method, the aforesaid expressive registers are expressive registers generated by the trained artificial intelligence, AI, model, based on user's request and according to the modes of fruition and/or use cases requested by the user. In other words, the aforesaid expressive registers are differentiated on the basis of a respective use case.

According to different possible implementations, the aforesaid modes of fruition or use cases and associated expressive registers comprise any one or a plurality of the following cases:
- face-to-face lesson-presentation, with associated expressive register comprising an objective description written in the third person; and/or
- individual virtual reality VR experience, with expressive register comprising a personalized guide, audio or text, using the second person singular; and/or
- collective interaction in augmented reality AR, with an expressive register comprising collaborative sharing, audio or text, using the first person plural.

According to an embodiment of the method, a plurality of the aforesaid actions for fruition of extended reality and a plurality of the aforesaid expressive registers selectable based on the user indications are available.

According to an embodiment of the method, all the aforesaid actions for fruition of extended reality and all the aforesaid expressive registers selectable based on the user indications are available.

According to a preferred embodiment of the method, the aforesaid extended reality, XR, comprises virtual reality, VR.

According to an implementation of such an embodiment, the aforesaid modes of fruition or use cases and associated expressive registers comprise at least one individual virtual reality VR experience, with expressive register comprising a personalized guide, audio or text, using the second person singular.

According to an implementation, the method includes correlating the generative AI (for example, LLM) to the 3D database of existing virtual reality VR environments.

More specifically, according to an implementation, the method includes generating, by means of AI, written or vocal descriptive texts, automatically correlated to existing virtual environments present in the 3D database.

According to an implementation, the method includes an interaction with virtual tour editor applications (also per se known, such as, for example, "3dvista", "thinglink", "XR edulab") correlating them to LLM generative AI models (also per se known as, for example, "ChatGPT", "LLaMa", "Mistral", and so on).

According to an embodiment of the method, the aforesaid extended reality, XR, comprises augmented reality, AR.

According to an embodiment of the method, the aforesaid extended reality, XR, comprises both virtual reality, VR, and augmented reality, AR.

According to an embodiment, the method comprises the further step of training the artificial intelligence, AI, model based on a plurality of three-dimensional training databases 3D and a plurality of training textual documentation databases, representative of known user indications.

Such a training step comprises training the artificial intelligence model to interpret the information and the 3D three-dimensional database elements and correlate them with textual documentation information.

According to an implementation of the aforesaid embodiment, the training step further comprises forcing the artificial intelligence, AI, model both to correlate contents to the three-dimensional database and to express itself in narrative forms consistent with at least one of said "environment", "object", "interactive point", "animation" types of the 3D database elements.

In simplified terms, it is possible to say that the artificial intelligence model is thus trained both to "think" and to "express itself' in 3D.

According to an implementation, the step of training the Artificial Intelligence focuses on the interpretation of the text provided by a "Data Ingestion" step as a description of a virtual environment, and in particular of the constituent elements thereof.

For example, in a general text relating to an airport, the aim is to try and identify the contents relevant to the elements of the 3D database of the virtual reconstruction of an airport: environments (control tower), objects (an airplane), interactive points (signs, screens inside the control tower), animations (take-off, landing).

Moreover, in such an example, the AI model is trained to present within the virtual environment the expressive forms consistent with the immersive experience: therefore, for an environment, the description of the current location will be formulated; for an object, it will be illustrated "what it is", therefore the external shape and the parts forming it; for an interactive point, the function and meaning will be explained; for the animation, a description of "how it works" will be provided.

According to an implementation option, the method for training the artificial intelligence model can also be effectively described with the expression "training artificial intelligence to think and express itself in 3D". Therefore, starting from a generic informative text, for example a "Wikipedia" entry, the AI model is trained to trace the pieces of information present to the elements of a 3D environment, and to express them in forms consistent with immersive storytelling, i.e., simulating the situation in which the user is within the virtual environment.

Consider, for example, encyclopedic entries regarding the city of Rome, the Colosseum or St. Peter's Basilica, or the operating manual of an operating room. By correlating these textual documents with the elements of the 3D database, and knowing how to distinguish the different situations of an environment, an object, an interactive point or an animation, the 3D model is trained to generate texts which are relevant and in the narrative form most suited to the individual case.

According to an embodiment of the method, the aforesaid artificial intelligence, AI, model is an Open Source artificial intelligence model, trained to integrate contents generated by artificial intelligence with three-dimensional databases.

According to another embodiment of the method, the aforesaid artificial intelligence, AI, model is an artificial intelligence model implemented by a generative Artificial Intelligence service, available in Cloud or On Premise, trained to integrate contents generated by artificial intelligence with three-dimensional databases.

In such a case, the method further comprises developing or using one or more Application Programming Interfaces, APIs, on said generative artificial intelligence service, adapted to produce contents in data formats and structures integrable into said extended reality and/or immersive environment.

More specifically, in this embodiment, the integration of Al-generated contents with 3D databases can derive not only from Open Source AI models directly trained for the purpose, but also from current or future generative artificial intelligence AI services available on the market, offered by third-party operators in Cloud or On Premise, potentially capable of interacting with a 3D database. In this implementation example, there is provided the development or use of Application Programming Interfaces, APIs, on existing AI services, suitably adapted to produce contents in formats and data structures integrable into the immersive environment.

This application maintains the assumptions already described, but provides for specific Coding and Prompt Engineering developments to adapt the output of an external generative AI, created for general purposes, to the specific needs of the immersive environment.

By way of explanation, it is possible to imagine a development on ChatGPT to create textual contents on a specific immersive content (for example, a virtual tour of a church, or a description of an airport) already adapted for integration into the structure of the 3D database of a corresponding 3D content, consisting of environments, objects, interactive points, animations.

According to an embodiment of the method, the aforesaid user interface comprises an XR interface, configured to allow an interaction by the user through gestural actions by means of a mouse and/or touch screen, and/or controller, and/or his/her hands, or by fixing the gaze on active points.

According to another embodiment of the method, the aforesaid user interface comprises an AI interface, configured to allow an interaction by the user through text mode by means of a keyboard or a voice mode using a microphone, with activation of the artificial intelligence model by means of API.

According to possible embodiments, the 3D three-dimensional database and the user interface are accessible via web browser and/or supported by cloud architectures.

In particular, according to possible implementation examples, the user interface can take the form of a library or catalog of 3D objects searchable and consultable individually, or that of a laboratory, virtual tour or metaverse consisting of many interconnected navigable elements.

According to an implementation option, the user interface on the web browser is a webXR-standard interface, configured to display three-dimensional elements of the 3D three-dimensional database, receive voice and/or text inputs, and show the aforesaid 3D three-dimensional elements and the information generated by the artificial intelligence AI model in an integrated manner, i.e., visual, textual, auditory.

In accordance with different possible embodiments, the method comprises the further step of providing the user with either or both of the following integrated interactive experiences:
- through 3D, spatial and/or visual and/or gestural exploration, and/or
- through text and voice prompts describing the elements of the three-dimensional environment of extended reality viewed by the user.

In accordance with other possible embodiments, the method comprises the further step of providing the user with either or both of the following possibilities of integrated content editing:
- uploading of 3D three-dimensional elements with corresponding textual metadata, comprising titles and descriptions; and/or
- "data ingestion" of relevant textual documentation by means of the aforesaid artificial intelligence AI model, trained to recognize the elements of the 3D three-dimensional database.

In accordance with other embodiments of the method, the aforesaid extended reality, XR, contents comprise informative digital modules and/or interactive digital lessons and/or interactive and/or dynamic teaching contents.

To better identify the nature of an immersive lesson, according to an implementation option of the method, this can be described in different forms: for example, a virtual tour in ancient Rome consisting of multiple environments, objects, interactive points and animations, in turn associated with descriptive texts, images, audio.

According to another example, an immersive lesson can be an anatomical atlas of the human body, consisting of 3D models of the different organs and systems, whose parts and details are presented with interactive points superimposed on the anatomical parts, and comprising 3D animations of physiological functions such as breathing or cardiac circulation. Such an immersive lesson is used both by a teacher to present a topic to the class, as well as by a student to study the topic individually.

According to an embodiment, in which the aforesaid extended reality, XR, contents comprise interactive teaching contents, the method comprises the further steps of:
- organizing a modular learning space with three possible configurations in the same classroom: face-to-face lesson from a screen, individual experience with virtual reality visor, collaborative interaction in augmented reality;
- implementing one of said three configurations, moving user stations and arranging content viewing devices in respective manners;
- determining, by the artificial intelligence, AI, model, an expressive register, among the aforesaid possible expressive registers, corresponding to the implemented configuration;
- providing contents with the aforesaid determined expressive register, corresponding to the implemented configuration.

According to another embodiment, in which the aforesaid extended reality, XR, contents comprise incremental immersive teaching contents, the method comprises the further steps of enabling both the fruition of extended reality contents and the personalization and creation of extended reality, XR, and/or artificial intelligence, AI, contents.

A method for training an artificial intelligence, AI, model, also included in the present invention, is described below. Such a training method is aimed at allowing the once-trained artificial intelligence, AI, model to:
- identify elements of a 3D database associated with a representation of extended reality, XR, and belonging to at least one of the types "environment", "object", "interactive point", "animation", and semantically correlate such identified elements with information generated by a textual documentation database;
- based on the aforesaid semantic correlation, perform one or more of the following steps: activating actions for fruition of extended reality corresponding to user indications regarding extended reality contents, and/or providing a user with extended reality contents by means of modes and/or expressive registers corresponding to user indications regarding modes of fruition.

The training method comprises training the artificial intelligence, AI, model based on a plurality of three-dimensional training databases 3D and a plurality of training textual documentation databases, representative of known user indications.

The aforesaid training step comprises training the artificial intelligence model to interpret the information and the 3D three-dimensional database elements and correlate them with textual documentation information.

The aforesaid training step further comprises forcing the artificial intelligence, AI, model both to correlate contents to the three-dimensional database and to express itself in narrative forms consistent with at least one of said "environment", "object", "interactive point", "animation" types of the 3D database elements.

As already described above, the method for training the artificial intelligence model can also be effectively described with the expression "training artificial intelligence to think and express itself in 3D". Therefore, starting from a generic informative text, for example a "Wikipedia" entry, the AI model is trained to trace the pieces of information present to the elements of a 3D environment, and to express them in forms consistent with immersive storytelling, i.e., simulating the situation in which the user is within the virtual environment.

Consider, for example, encyclopedic entries regarding the city of Rome, the Colosseum or St. Peter's Basilica, or the operating manual of an operating room. By correlating these textual documents with the elements of the 3D database, and knowing how to distinguish the different situations of an environment, an object, an interactive point or an animation, the 3D model is trained to generate texts which are relevant and in the narrative form most suited to the individual case.

The present invention further comprises a method of organizing modular and dynamic learning spaces, comprising the execution of the method for access to and fruition of digital contents comprising extended reality contents, according to any one of the embodiments described above, and a step of organizing modular and dynamic learning spaces, based on the results of the aforesaid method for access to and fruition of digital contents.

Also comprised in the present invention is a method of providing incremental immersive teaching, comprising the execution of the method for access to and fruition of digital contents comprising extended reality contents, according to any one of the embodiments described above, and a step of providing incremental immersive teaching, based on the results of the aforesaid method for access to and fruition of digital contents.

Incremental immersive teaching offers teachers and students increasing levels of interaction with virtual environments. According to some implementations, three levels are provided: use of existing contents, re-processing, creation.

In relation to the context considered herein, this means, for example, that the first level, i.e., "fruition", consists of an immersive experience inside the Colosseum reconstructed in 3D and already correlated to information generated by AI, without any creative contribution.

In the second level, i.e., "re-processing", the 3D Colosseum can be provided as a basic content, but the teaching activity consists in inserting interactive points ("Cavea", "Arena", etc.) and in uploading descriptive texts, which will be correlated to the interactive points, into the AI "Data Ingestion" system.

The third level, i.e., "creation of contents", involves starting from scratch, entering the real Colosseum, taking virtual images with a 360-degree video camera, uploading them to the virtual backend and enriching them with titles and descriptions, and also inserting historical documents, thus obtaining a virtual tour enriched by Al-generated descriptions.

In such implementation examples, the provision of incremental immersive teaching is enhanced by the integration of extended reality with artificial intelligence, both in the first level of pure fruition of 3D and AI contents already available (in such a case, only the frontend is used), as well as in the second level in which only the 3D elements are provided and the re-processing consists in searching and uploading descriptive documents, and in the third level in which both the 3D contents and the textual contents to be correlated with AI are created, searched and uploaded into the two backends.

An electronic processing system for access to and fruition of digital contents comprising extended reality, XR, contents according to the present invention is described below.

Such a system comprises first electronic backend processing means, electronic frontend processing means and second electronic backend processing means.

The first electronic backend processing means are configured to implement and make accessible at least one 3D three-dimensional database of three-dimensional digital data representing the aforesaid extended reality, XR, content. Such a 3D three-dimensional database comprises 3D database elements associated with the representation of extended reality, XR. Such elements belong to at least one of the following types: "environment", "object", "interactive point", "animation".

The electronic frontend processing means are configured to provide a user with a user interface, adapted to receive user indications from the user regarding extended reality contents that the user wishes to use and/or user indications regarding modes of fruition of extended reality contents, and further configured to provide the user with extended reality contents.

The second electronic backend processing means are configured to generate a textual documentation database based on at least part of the user instructions, and implement a trained artificial intelligence, AI, model configured to perform the following actions:
- identifying the aforesaid 3D database elements and semantically correlating them to information generated by the aforesaid textual documentation database;
- performing, based on such a semantic correlation, one or more of the following steps: activating actions for fruition of extended reality corresponding to the user indications regarding extended reality contents, and/or providing the user with extended reality contents by means of modes and/or expressive registers corresponding to the user indications regarding modes of fruition.

According to an embodiment of the system, the aforesaid electronic frontend processing means comprise: a multi-device web interface module, an extended reality, XR, interface module, an artificial intelligence, AI, interface module, a module for providing extended reality, XR, contents and/or experiences and/or interactions.

According to an embodiment of the system, the aforesaid electronic frontend processing means, first electronic backend processing means, second electronic backend processing means are implemented by means of a platform comprising computers or electronic processors interoperating with one another and telecommunicatively connected, locally or remotely, capable of executing a plurality of programs or software modules configured to perform the functions of a method according to any one of the embodiments of the method described above.

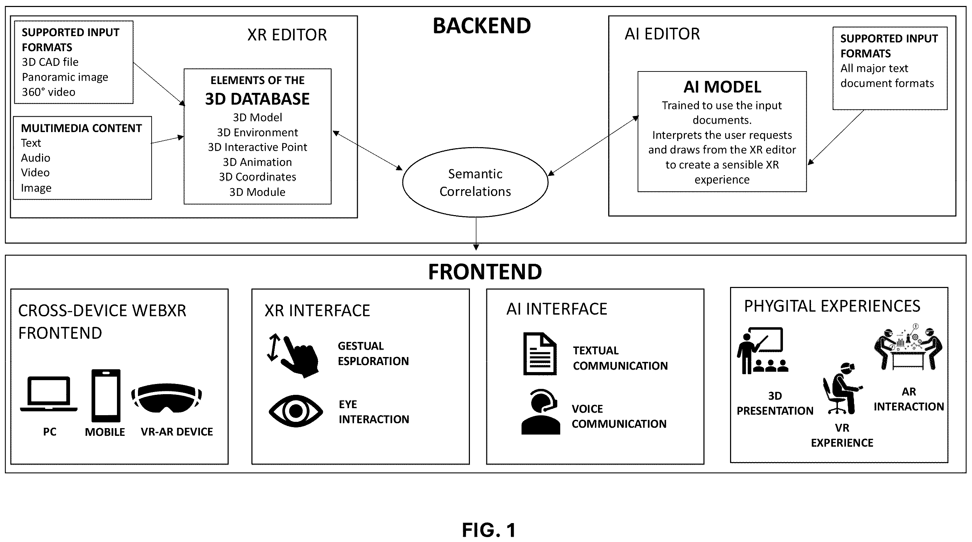

By way of non-limiting example, further detailed examples of application of the method according to the invention are described below with reference to Figures 1-3.

With reference to the elements and metadata of the 3D database, according to an embodiment, the system creates a database of metadata associated with 3D elements, uploaded and managed by the 3D editor: 3D Environment, 3D Model, 3D Interactive Point, 3D Animation, 3D Module (virtual tour or 3D lesson comprising multiple elements).

Each element is associated with two textual information: Title and Description.

According to an embodiment, the elements of the 3D database are organized into 3D thematic modules (for example, in the form of immersive lessons, augmented manuals or virtual tours) relevant to specific topics and semantic domains (for example: the 3D representation of an industrial environment, the virtual tour of a tourist location).

Conventionally, an immersive thematic module consists of multiple 3D elements connected to one another. The platform provided in the system according to the invention allows to connect environments, objects, interactive points, animations with one another.

The supported formats, according to conventional implementation examples, are 3D CAD files, panoramic images, 360° videos.

The 3D three-dimensional database also includes data capable of identifying the position and rotation of the 3D elements, through 3D coordinates, navigation maps, zoom levels.

For example, it is possible to identify the 3D position of an interactive point within a virtual environment (for example, a fresco in a church) or of a 3D object (for example, a part of a machine).

According to an embodiment, the system and the method of the invention are capable of generating camera actions (Pan/Tilt/Zoom) consistent with 3D coordinates and 3D elements: for example, framing an interactive point from within a 360-degree panoramic image, or from outside a 3D object.

Figure 1 shows a schematic depiction of the main components of a platform implementing the method according to an embodiment of the invention, wherein the platform is divided into two macro areas dedicated to extended reality XR and artificial intelligence AI.

With reference now to the trained artificial intelligence AI model (i.e., trained algorithm or software module implementing AI techniques), the following further details are provided, referring to an embodiment of the method and the system according to the invention.

The AI model and the relevant templates are trained and optimized to interpret the textual information of the 3D database and correlate it with other relevant information and documentation, uploaded through a "data ingestion" function of the artificial intelligence editor.

The goal is to identify and distinguish the elements of a 3D database (which can be of four types, as described above: environments, objects, interactive points, animations), semantically correlate them with information generated by textual documentation and activate corresponding actions.

For example, when given a prompt relating to a specific topic, the artificial intelligence model is capable of identifying the different types of elements present in the relevant 3D database and activating actions in the virtual context:
- if it is an environment, the user is virtually taken inside the environment;
- if it is an object, the object is displayed in front of the user in 3D;
- in the case of an interactive point, the 3D frame is centered thereon;
- in the case of 3D animations, the 3D animations are started.

For example, the AI training, i.e., the training of the artificial intelligence model, requires that when "where is it?" is asked in relation to a certain place, the environment is identified within the virtual tour and the user is taken directly inside it.

If, on the other hand, the request in relation to an object is "how does it work?", the artificial intelligence model is trained so that it not only identifies the object but it also starts any animation which describes the functioning thereof. The descriptive apparatus draws on both the textual metadata uploaded into the AI system by means of "data ingestion" and the titles and descriptions of the 3D database.

The semantic analysis, therefore, takes into account the types of extended reality experiences relevant to the requests made by users.

The information produced is different in the cases of a face-to-face lesson-presentation, an individual immersive experience, and a collective interaction in augmented reality.

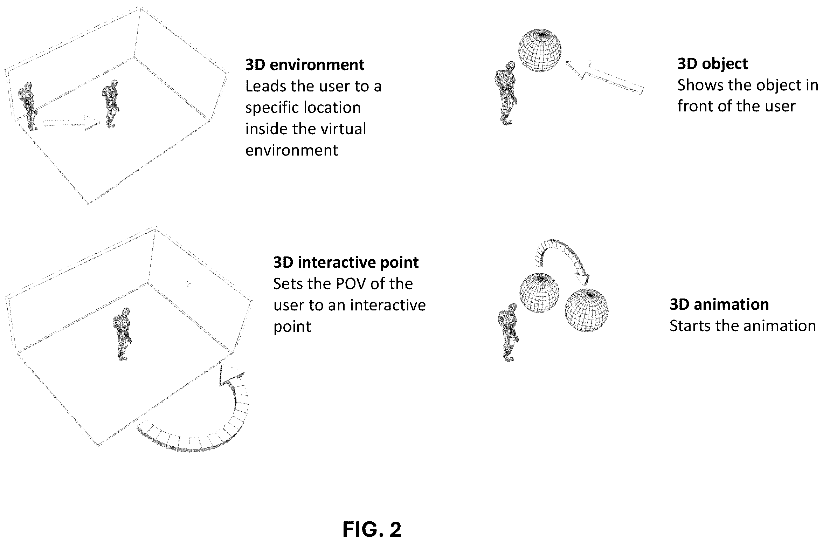

Figure 2 displays the 3D elements and the respective actions activated by the AI prompts.

According to an embodiment, the interaction, in the extended intelligence environment, occurs by means of two types of "user experience" enabled by the user interface:
1) immersive interaction by means of gestural exploration and by fixing the gaze on specific frames and points;
2) interaction by means of textual or vocal prompts which query the AI model.

In case 1), mentioned above, the immersive exploration is accompanied by Al-generated textual or audio insights.

In case 2), mentioned above, the interaction occurs by means of prompts or simple questions in text and voice form. The system recognizes and displays the relevant elements of the 3D database and shows them to the user, along with text or voice descriptions processed *ad hoc* in real time.

With reference now to the "backend" and "frontend" parts of the system according to the invention, further details of some embodiments are described below.

Both the backend and the frontend are accessible in cloud from a web browser.

According to an implementation, the backend allows data input, by means of two modules:
- "XR EDITOR", which manages the aspects of extended reality, in particular 3D elements and related metadata;
- "Al EDITOR", which manages the aspects of artificial intelligence, in particular textual documents subjected to machine learning.

According to an embodiment, the method and the system of the invention allow for the creation of immersive experiences, by virtue of the frontend which manages two types of interactions:
- "extended reality interface" (or "XR INTERFACE"), in which it is possible to interact by means of different gestural actions depending on the devices (mouse, touch, controller and hands), or just by fixing the gaze on active points; such an interface is, for example, a webXR-standard interface;
- "artificial intelligence interface" (or "AI INTERFACE") in which it is possible to interact in text mode (keyboard) or voice mode (microphone), activating the AI model by means of APIs.

Figure 1 shows an illustration of the backend and frontend, displaying the ergonomic modes of interaction divided between XR and AI.

According to an embodiment of the system (and a corresponding embodiment of the method) according to the invention, the fruition of the contents can be carried out in six different modes, both online and offline.

### A) ON SITE: 3D LESSON, VIRTUAL EXPERIENCE, AUGMENTED INTERACTION IN THE PLATFORM

(A1) 3D lesson. This is a face-to-face lesson or presentation, enabled by a PC or by another device connected to the platform. The presenter or teacher interacts with the contents and displays them on the screen.
(A2) Virtual experience. Access to the platform occurs with virtual reality headsets provided with a web browser and connected to the network. The participants in the experience, for example the students in the class, are usually seated on swivel chairs and fruition is individual.
(A3) Augmented interaction. By virtue of a device enabled for augmented reality (smartphone, tablet, hybrid headset or AR glasses) 3D contents are displayed in the physical environment, overlaying an empty space. Users can move around the object and interact therewith.
This set of modes of fruition translates into an original way of organizing the learning space. In the same environment, for example a school classroom, simply by moving the seats and alternating the devices, three modes of interaction can be created: face-to-face lesson, virtual experiences, augmented interactions.

### B) ONLINE: DISTANCE INTERACTION

(B1) 3D website. This is a website generated by the platform in the form of a tour or virtual environment. It is used individually by online users on a web browser.
(B2) Interactive 3D Online Meeting. Solution which allow to create online video lessons or video meetings in which it is possible to interact with shared 3D elements. While the meeting is taking place and users can see and hear each other via microphone and camera, they can also move within the virtual environment or interact with a shared 3D object.
(B3) Metaverse with avatars. Virtual environments become 3D spaces where users move in "walk through" mode as avatars. In this context, the AI component comes in the form of Bots which act as conversational interfaces.

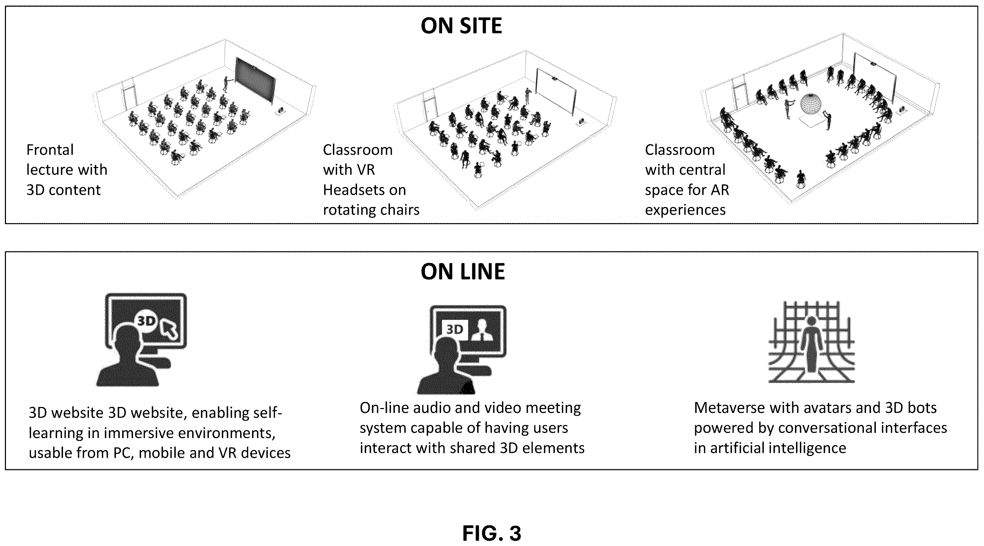

Figure 3 shows the six modes of fruition enabled by the platform, described above, of which 3 are online and 3 on site.

The platform of the system, according to an embodiment provided in the invention, enables an innovative teaching methodology, defined as Incremental Immersive Teaching.

According to such an embodiment, users (teachers and students) have the opportunity to learn through the platform by means of three increasing levels of teaching interaction.
(I). USE OF EXISTING CONTENTS. This involves consulting the XR+AI contents already present in the digital library offered by the platform.
(II). RE-PROCESSING OF EXISTING CONTENTS. By virtue of the two editors, it is possible to customize the contents. For example, adding interactive points on existing 3D elements or "data ingestion" of relevant textual contents.
(III). CREATION OF NEW CONTENTS. When using the editors, it is always possible to develop a project from scratch and create 3D contents - for example with a 360° video camera, a 3D computer graphics software - upload them to the platform, create interactive modules, add multimedia contents and carry out "data ingestion" of information which is processed by the integrated artificial intelligence model.

As can be seen, the objects of the present invention as previously indicated are fully achieved by the method and system disclosed above by virtue of the features described above in detail.

In fact, the solution described above provides a digital platform in cloud which allows the interaction with elements in virtual and augmented reality combined with information generated by artificial intelligence.

More specifically, according to the different embodiments described above, they define an integrated cloud solution, accessible from a web browser, consisting of a backend which allows users to upload both 3D contents for AR and VR as well as textual contents for AI, and a frontend which allows both to interact with the 3D elements (environments, objects, interactive points, animations, provided with titles and descriptions) and to use relevant contents generated by artificial intelligence.

Moreover, the solution described above is characterized by a specific structuring of the 3D database and by a peculiar training of the AI model to recognize and activate the 3D elements.

According to some embodiments, the solution described above is related to an original organization of the learning space, which allows to create different immersive teaching experiences within a classroom.

The method and the system according to the invention can be used for different purposes and applications, including:
- teaching, for example, for the creation of immersive lessons, training courses and phygital educational laboratories;
- dissemination, manuals, usage instructions, tourist guides, virtual museums, editorial works;
- marketing, for example the promotion of products and services, by means of immersive experiences;
- entertainment, for example, digital games and "gamification".

Moreover, the technical solution of the present invention, described above, allows to satisfy the need for an integration of virtual contents, capable of obtaining a multimedia and multi-sensorial effect which enables a significant enrichment of the data and teaching experience, and textual contents processed by Artificial Intelligence, capable of offering textual, in-depth data to extended reality.

Those skilled in the art may make changes and adaptations to the embodiments of the method, device and system described above or may replace elements with others which are functionally equivalent in order to meet contingent needs, without departing from the scope of the following claims. Each of the features described as belonging to a possible embodiment can be made irrespective of the other embodiments described.

## Claims

1. A method for access to and fruition of digital contents comprising extended reality, XR, contents, wherein the method is carried out by electronic processing and comprises:
- providing at least one 3D three-dimensional database of three-dimensional digital data representative of said extended reality, XR, contents, said 3D three-dimensional database comprising 3D database elements associated with the representation of extended reality, XR, said elements belonging to at least one of the following types: "environment", "object", "interactive point", "animation";
- providing a user interface, accessible through electronic processing means, adapted to receive user indications from a user regarding extended reality contents that the user wishes to use and/or user indications regarding modes of fruition of extended reality contents;
- generating a database of textual documentation based on at least part of said user indications;
- by means of a trained artificial intelligence, AI, model identifying said 3D database elements and semantically correlating them to information generated by said textual documentation database;
- based on said semantic correlation, carrying out one or more of the following steps by means of said artificial intelligence, AI, model:
activating actions for fruition of extended reality corresponding to said user indications regarding extended reality contents, and/or
providing the user with extended reality contents through modes and/or expressive registers corresponding to said user indications regarding modes of fruition.

2. A method according to claim 1, wherein said actions for fruition of extended reality are actions governed and activated by the trained artificial intelligence, AI, model, in the three-dimensional database, 3D, and comprise any one or any combination of the following actions:
- action associated with a "3D environment" element, comprising positioning the user within a specific virtual extended reality environment, said specific virtual extended reality environment being, for example, a setting drawn in 3D, or a single 360-degree photograph, or a virtual tour or a 360-degree video; and/or
- action associated with a "3D object" or "3D model" element, comprising showing the extended reality object in front of the user; and/or
- action associated with an "interactive point" element, comprising showing a three-dimensional framing of a specific interactive point; and/or
- action associated with an "animation" element, comprising activating an animation to be shown to the user, in the extended reality context.

3. A method according to any one of the preceding claims, wherein said expressive registers are expressive registers generated by the trained artificial intelligence, AI, model based on user's request and according to the modes of fruition and/or use cases requested by the user, i.e., wherein said expressive registers are differentiated based on a respective use case.

4. A method according to claim 3, wherein said modes of fruition or use cases and associated expressive registers comprise any one or a plurality of:
- face-to-face lesson-presentation, with associated expressive register comprising an objective description written in the third person; and/or
- individual virtual reality VR experience, with expressive register comprising a personalized guide, audio or text, using the second person singular; and/or
- collective interaction in augmented reality AR, with an expressive register comprising collaborative sharing, audio or text, using the first person plural.

5. A method according to any one of the preceding claims, wherein all the aforesaid actions for fruition of extended reality and all the aforesaid expressive registers selectable based on the user indications are available.

6. A method according to any one of the preceding claims, wherein said extended reality, XR, comprises virtual reality, VR.

7. A method according to any one of the preceding claims, wherein said extended reality, XR, comprises augmented reality, AR.

8. A method according to any one of the preceding claims, comprising the further step of:
- training the artificial intelligence, AI, model based on a plurality of three-dimensional training databases 3D and a plurality of training textual documentation databases, representative of known user indications,
wherein said training step comprises training the artificial intelligence model to interpret the information and the 3D three-dimensional database elements and correlate them with textual documentation information,
and/or wherein said training step further comprises forcing the artificial intelligence, AI, model both to correlate contents to the three-dimensional database and to express itself in narrative forms consistent with at least one of said "environment", "object", "interactive point", "animation" types of the 3D database elements.

9. A method according to any one of claims 1-8, wherein said artificial intelligence, AI, model is an Open Source artificial intelligence model, trained to integrate contents generated by artificial intelligence with three-dimensional databases,
and/or wherein said artificial intelligence, AI, model is an artificial intelligence model implemented by a generative Artificial Intelligence service, available in Cloud or On Premise, trained to integrate contents generated by artificial intelligence with three-dimensional databases, and wherein the method further comprises developing or using one or more Application Programming Interfaces, APIs, on said generative artificial intelligence service, adapted to produce contents in data formats and structures integrable into said extended reality and/or immersive environment.

10. A method according to any one of the preceding claims, wherein said user interface comprises:
- an XR interface, configured to allow an interaction by the user through gestural actions by means of a mouse and/or touch screen, and/or controller, and/or his/her hands, or by fixing the gaze on active points;
and/or wherein said user interface comprises:
an AI interface, configured to allow an interaction by the user through text mode by means of a keyboard or a voice mode using a microphone, with activation of the artificial intelligence model by means of API,
and/or wherein the 3D three-dimensional database and the user interface are accessible via web browser, wherein the user interface on the web browser is a webXR-standard interface, configured to display three-dimensional elements of the 3D three-dimensional database, receive voice and/or text inputs, and show said 3D three-dimensional elements and the information generated by the artificial intelligence AI model in an integrated manner, i.e., visual, textual, auditory.

11. A method according to any one of the preceding claims, wherein the method comprises the further step of providing the user with either or both of the following integrated interactive experiences:
- through 3D, spatial and/or visual and/or gestural exploration, and/or
- through text and voice prompts describing the elements of the three-dimensional environment of extended reality viewed by the user,
and/or wherein the method comprises the further step of providing the user with either or both of the following possibilities of integrated content editing:
- uploading of 3D three-dimensional elements with corresponding textual metadata, comprising titles and descriptions; and/or
- "data ingestion" of relevant textual documentation by means of said artificial intelligence AI model, trained to recognize the elements of the 3D three-dimensional database.

12. A method according to any one of the preceding claims, wherein said extended reality, XR, contents comprise informative digital modules and/or interactive digital lessons and/or interactive and/or dynamic teaching contents,
and/or wherein said extended reality, XR, contents comprise interactive teaching contents, and wherein the method comprises the further steps of:
- organizing a modular learning space with three possible configurations in the same classroom: face-to-face lesson from a screen, individual experience with virtual reality visor, collaborative interaction in augmented reality;
- implementing one of said three configurations, moving user stations and arranging content viewing devices in respective manners;
- determining, by the artificial intelligence, AI, model, an expressive register, among said expressive registers, corresponding to the implemented configuration;
- providing contents with said determined expressive register, corresponding to the implemented configuration,
and/or wherein said extended reality, XR, contents comprise incremental immersive teaching contents, and wherein the method comprises the further steps of enabling both the fruition of extended reality contents and the personalization and creation of extended reality, XR, and/or artificial intelligence, AI, contents.

13. A method for training an artificial intelligence, AI, model in order to allow the once-trained artificial intelligence, AI, model to:
- identify elements of a 3D database associated with a representation of extended reality, XR, and belonging to at least one of the types "environment", "object", "interactive point", "animation", and semantically correlate said identified elements with information generated by a textual documentation database;
- based on said semantic correlation, perform one or more of the following steps: activating actions for fruition of extended reality corresponding to user indications regarding extended reality contents, and/or providing a user with extended reality contents by means of modes and/or expressive registers corresponding to user indications regarding modes of fruition,
wherein the training method comprises:
- training the artificial intelligence, AI, model based on a plurality of three-dimensional training databases 3D and a plurality of training textual documentation databases, representative of known user indications,
wherein said training step comprises training the artificial intelligence model to interpret the information and the 3D three-dimensional database elements and correlate them with textual documentation information,
and wherein said training step further comprises forcing the artificial intelligence, AI, model both to correlate contents to the three-dimensional database and to express itself in narrative forms consistent with at least one of said "environment", "object", "interactive point", "animation" types of the 3D database elements.

14. An electronic processing system for access to and fruition of digital contents comprising extended reality, XR, contents comprising:
- first electronic backend processing means, configured to implement and make accessible at least one 3D three-dimensional database of three-dimensional digital data representative of said extended reality, XR, contents, said 3D three-dimensional database comprising 3D database elements associated with the representation of extended reality, XR, said elements belonging to at least one of the following types: "environment", "object", "interactive point", "animation";
- electronic frontend processing means, configured to provide a user with a user interface, adapted to receive user indications from the user regarding extended reality contents that the user wishes to use and/or user indications regarding modes of fruition of extended reality contents, and further configured to provide the user with extended reality contents;
- second electronic backend processing means, configured to:
- generate a database of textual documentation based on at least part of said user indications;
- implement a trained artificial intelligence, AI, model configured to:
- identify said 3D database elements and semantically correlate them to information generated by said textual documentation database;
- perform, based on said semantic correlation, one or more of the following steps: activating actions for fruition of extended reality corresponding to said user indications regarding extended reality contents, and/or providing the user with extended reality contents by means of modes and/or expressive registers corresponding to said user indications regarding modes of fruition.

15. An electronic processing system according to claim 14, wherein said electronic frontend processing means comprise:
- a multi-device web interface module;
- an extended reality, XR, interface module;
- an artificial intelligence, AI, interface module;
- a module for providing contents and/or experiences and/or interactions of extended reality, XR,
and/or wherein said electronic frontend processing means, first electronic backend processing means, second electronic backend processing means are implemented by means of a platform comprising computers or electronic processors interoperating with one another and telecommunicatively connected, locally or remotely, capable of executing a plurality of programs or software modules configured to perform the functions of a method according to any one of claims 1-12.
